# EUROPEAN PATENT APPLICATION

(11) **EP 4 600 392 A1**
(43) Date of publication of application: **13.08.2025**
(21) Application number: 23874522.8
(22) Date of filing: 08.08.2023
(51) Int. Cl.: C22C 21/02, C22C 21/06, C22C 21/12, F16B 35/00, C22F 1/00, C22F 1/05, C22F 1/057

(54) **MATERIAL FOR ALUMINUM ALLOY SCREW, AND ALUMINUM ALLOY SCREW AND PRODUCTION METHOD THEREFOR**

(30) Priority: 04.10.2022 JP 2022159901
(71) Applicant: Nippon Light Metal Company, Ltd., Tokyo 105-0004 (JP); YAMASHINA CORPORATION, Kyoto-shi, Kyoto 607-8155 (JP)
(72) Inventor: TANAI Yuichiro, Tokyo 105-0004 (JP); NIWA Kenji, Tokyo 105-0004 (JP); HANDA Takeshi, Shizuoka-shi, Shizuoka 421-3203 (JP); IKEDA Seiji, Kyoto-shi, Kyoto 607-8155 (JP)
(74) Representative: Mewburn Ellis LLP
(86) International application number: PCT/JP2023/028901
(87) International publication number: WO 2024/075389

(57) **Abstract**

The present invention provides an aluminum alloy screw that uses 6000 series aluminum suitable for recycling, that has sufficient mechanical properties, and that can be used for fastening, with respect to automobile parts or the like, which is subjected to loads and is required to be highly reliable. Also provided are: a simple and efficient method for producing this aluminum alloy screw; and an aluminum allow screw material that can be suitably used in said production. The aluminum alloy screw according to the present invention is characterized by containing 0.9-1.3 wt% Si, 0.8-1.5 wt% Cu, 0.8-1.2 wt% Mg, 0.2-0.4 wt% Cr, 0.15-0.45 wt% Mn, 0.005-0.05 wt% Ti, with the remainder including Al and unavoidable impurities, where the tensile properties of the screw shaft section is such that the tensile strength is 460 MPa or more, the 0.2% yield strength is 380 MPa or more, and the breaking elongation is 10% or more.

## Description

### TECHNICAL FIELD

The present invention relates to an aluminum alloy screw, a material for the aluminum alloy used to manufacture the screw, and an efficient method for producing the aluminum alloy screw. The screws include bolts and nuts.

### PRIOR ARTS

Conventionally, steel materials having excellent mechanical properties and stainless steel materials having good corrosion resistance have been used for bolts. However, in recent years, from the viewpoints of energy conservation and reduction of CO₂ emissions, there is a strong demand for weight reduction in transportation equipment such as automobiles, and weight reduction is also being demanded for screws such as bolts used in such transportation equipment.

In response to these demands, in order to achieve weight reduction of screws, bolts made of aluminum alloys and bolts made of magnesium alloys, which are lighter than aluminum, have been proposed.

For example, in Patent Literature 1 (Japanese Patent Unexamined Publication No. 2017-202497), for solving the problem of "realizing a producing method of a high strength aluminum alloy bolt for realizing a high-quality bolt as a half-screw from a post-wire draw processing raw material provided by executing wire draw processing processing on an Al-Mg-Zn system aluminum alloy wire rod of including Zn of 8 mass% or more", there is disclosed "a producing method of a bolt forms a head part intermediate element by executing header processing on a wire rod being a post-wire draw processing raw material formed by executing wire draw processing on an Al-Mg-Zn system aluminum alloy wire rod of including Zn of 8 mass% or more, and afterwards, heat treatment is executed, and next, rolling of a male screw is executed on the tip side among a shaft part intermediate element, and at least a part on the head part intermediate element side is formed as a non-screw part, and before executing the heat treatment on the post-wire draw processing raw material, first stage reduction is executed on a part for forming the male screw of the shaft part intermediate element and a part of becoming a non-screw part, and second stage reduction is executed on the part for forming the male screw except for the part of becoming the non-screw part among the shaft part intermediate element after the first stage reduction."

Further, in Patent Literature 2 (Japanese Patent Unexamined Publication No. 2015-124409), for solving the problem of "providing an aluminum alloy wire material suitable as a material of an aluminum alloy member which requires high intensity and heat resistance, a production method of it, and the aluminum alloy member", there is disclosed "an aluminum alloy wire having a composition containing, by mass%, 0.7% or more of Si and Mg, 1.5% or less of Cu and Zn, and the balance being Al and inevitable impurities, which has a tensile strength of 400 MPa or more after being solution-treated at 550°C and then aging-treated at 170°C×8 hours, and which has a tensile strength of 370 MPa or more after being subjected to a heat resistance test at 150°C×1000 hours after the heat resistance testing".

Furthermore, in Patent Literature 3 (Japanese Patent Unexamined Publication No. 2012-82474), for solving the problem of "providing a magnesium alloy filament excellent in heat resistance and plastic workability, and also providing bolts, nuts, and washers, obtained by using the same", there is disclosed "a filament magnesium alloy of a filament configured from a magnesium alloy, the magnesium alloy containing 0.1 mass% or more and 6 mass% or less Zn, more than 0.4 mass% and 4 mass% or less Ca, with the balance being Mg and inevitable impurities, and characterized in that when a creep test is performed on the linear body under conditions of a temperature of 150°C, a stress of 75 MPa, and a holding time of 100 hours or less, the creep strain is 1.0% or less."

### PRIOR LITERATURE

### PATENT LITERATURE

Patent Literature 1: Japanese Patent Unexamined Publication No. 2017-202497
Patent Literature 2: Japanese Patent Unexamined Publication No. 2015-124409
Patent Literature 3: Japanese Patent Unexamined Publication No. 2012-82474

### Summary of the Invention

### Technical Problem

Patent Literature 1 proposes the bolt made of the high-strength 7000 series aluminum alloy, and Patent Literature 2 proposes the bolt made of the 6000 series aluminum alloy whose strength has been increased by adding Zn or Zr. However, these aluminum alloys have problems in extrudability, corrosion resistance and electrical conductivity, and the 7000 series aluminum alloys also have problems in recyclability because of their high Zn content.

Further, Patent Literature 3 proposes the bolt made of the magnesium alloy, but when the magnesium alloy bolt is mixed into steel scraps during recycling, it may cause a deterioration in the quality of the steel material.

In view of the problems in the prior art as described above, an object of the present invention is to provide an aluminum alloy screw that uses 6000 series aluminum suitable for recycling, that has sufficient mechanical properties, and that can be used for fastening, with respect to automobile parts or the like, which is subjected to loads and is required to be highly reliable. Further, the objects of the present invention are to provide a simple and efficient method for producing the aluminum alloy screw, and to provide a material for aluminum allow screw that can be suitably used in the production.

### Solution to Problem

In order to achieve the above object, as the result of intensive study as to material for the aluminum alloy screws, aluminum alloy screws, and methods for producing the same, the present inventors have found that it is extremely effective to fully express the precipitation strengthening due to Al-Cu-Mg-Si-based compounds while keeping the upper limit of the amount of Mn added low, and have reached the present invention.

Namely, the present invention provides an aluminum alloy screw comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities; and
the tensile properties of the screw shaft portion are a tensile strength of 460 MPa or more, a 0.2% yield strength of 380 MPa or more, and an elongation at break of 10% or more.

By containing 0.8 to 1.5 wt % of Cu, the aluminum alloy screw of the present invention has high tensile strength and 0.2% yield strength due to precipitation strengthening of Al-Cu-Mg-Si-based compounds. Further, Mn is an element that is added primarily to suppress coarsening of the recrystallized structure, but by setting the upper limit of the amount added at 0.45 wt%, the decrease in quench sensitivity that occurs when the Mn content is large is suppressed. As a result, the excellent mechanical properties of the aluminum alloy screw are ensured. In addition, the decrease in electrical conductivity and thermal conductivity caused by the addition of Mn is also suppressed. Furthermore, unlike 7000 series aluminum alloys, the aluminum alloy screw of the present invention does not contain a large amount of Zn and has good recyclability.

In the aluminum alloy screw of the present invention, it is preferable that the Cu content is 1.1 to 1.5 wt %. By setting the lower limit of the Cu content at 1.1 wt%, the precipitation strengthening of the Al-Cu-Mg-Si-based compound can be more significantly exhibited, and the tensile strength and 0.2% yield strength of the aluminum alloy screw can be made at higher values.

Further, in the aluminum alloy screw of the present invention, it is preferable that the Cr content is more than 0.25 wt % and 0.4 wt % or less. By setting the lower limit of the Cr content at more than 0.25 wt %, a sufficient number of fine crystals are formed during casting, and coarsening of the recrystallized structure during heat treatment can be more reliably suppressed.

Further, in the aluminum alloy screw of the present invention, it is preferable that a fine recrystallized structure is formed in the screw shaft portion, and that the average crystal grain size (equivalent circle diameter) of the fine recrystallized structure is 120 µm or less. By forming the fine recrystallized structure having an average crystal grain size (equivalent circle diameter) of 120 µm or less in the screw shaft portion, the strength and reliability of the screw shaft portion can be imparted. In addition, the plastic workability required for forming the screw shaft portion can be ensured.

Further, the present invention provides a material for the aluminum alloy screw of the present invention, said aluminum material for the aluminum alloy screw comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities;
wherein no cracks occur in a compression test in which the compression ratio is 60% or less.

The material for the aluminum alloy screw of the present invention can exhibit good moldability with no cracks occurring at a compression ratio of 60% or less, when being made into an O-material. In addition, by drawing to the shaft diameter of the screw and then subjecting to the T6 treatment, it is possible to impart the high tensile strength and elongation at break.

Further, the present invention provides a material for the aluminum alloy screw of the present invention, said aluminum material for the aluminum alloy screw comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities; and
having tensile properties of 430 MPa or more in tensile strength and 8% or more in elongation at break.

In the material for the aluminum alloy screw of the present invention, the tensile properties of tensile strength of 430 MPa or more and elongation at break of 8% or more are imparted by drawing to the shaft diameter of the screw and then subjecting to the T6 treatment.

In the material for the aluminum alloy screw of the present invention, by containing 0.8 to 1.5 wt % of Cu, the high tensile strength and 0.2% yield strength are imparted due to precipitation strengthening of Al-Cu-Mg-Si-based compound. Further, Mn is an element that is added primarily to suppress coarsening of the recrystallized structure, but by setting the upper limit of the amount added at 0.45 wt%, the decrease in quench sensitivity that occurs when the Mn content is large is suppressed. As a result, in the material for the aluminum alloy screw of the present invention, the decrease in electrical conductivity and thermal conductivity caused by the addition of Mn is also suppressed in addition to having the excellent mechanical properties. Furthermore, unlike 7000 series aluminum alloys, the aluminum alloy screw of the present invention does not contain a large amount of Zn and has good recyclability.

The material for the aluminum alloy screw of the present invention has the tensile properties of tensile strength of 430 MPa or more and elongation at break of 8% or more after being drawn to the shaft diameter of the screw and further subjected to the T6 treatment, and by carrying out the processes such as heading and rolling to impart a screw shape, it is possible to impart the tensile properties of tensile strength of 460 MPa or more, 0.2% yield strength of 380 MPa or more, and elongation at break of 10% or more to the shaft portion of the finally obtained aluminum alloy screw.

In the material for the aluminum alloy screw of the present invention, it is preferable that the Cu content is 1.1 to 1.5 wt %. By setting the lower limit of the Cu content at 1.1 wt%, the precipitation strengthening of the Al-Cu-Mg-Si-based compound can be more significantly exhibited, and the tensile strength and 0.2% yield strength of the aluminum alloy screw can be made at higher values.

Further, in the material for the aluminum alloy screw of the present invention, it is preferable that the Cr content is more than 0.25 wt % and 0.4 wt % or less. By setting the lower limit of the Cr content at more than 0.25 wt %, a sufficient number of fine crystals are formed during casting, and coarsening of the recrystallized structure during heat treatment can be more reliably suppressed.

Furthermore, the present invention also provides a method for producing an aluminum alloy screw, comprising the steps of:
a heading process step of subjecting a material for an aluminum alloy screw containing Si: 0.9 to 1.3 wt%, Cu: 0.8 to 1.5 wt%, Mg: 0.8 to 1.2 wt%, Cr: 0.2 to 0.4 wt%, Mn: 0.15 to 0.45 wt%, Ti: 0.005 to 0.05 wt%, with the balance being Al and inevitable impurities to cold heading to form a screw head;
a heat treatment step of subjecting the material for the aluminum alloy screw to T6 heat treatment; and
a rolling process step of rolling the material for the aluminum alloy screw to form a screw shaft portion.

In the method for producing the aluminum alloy screw of the present invention, the heading process step and the rolling process step can be carried out simply and efficiently by using the material for the aluminum alloy screw of the present invention having good plastic workability. Further, by using the material for the aluminum alloy screw of the present invention, which provides solid solution strengthening and precipitation strengthening and suppresses coarsening of the recrystallized structure, it is possible to impart high strength and reliability to the aluminum alloy screw obtained after the heat treatment step.

In the method for producing an aluminum alloy screw of the present invention, by setting the cross-sectional area reduction rate of the material for the aluminum alloy screw in the heading process step to 30 to 85%, it is possible to suppress cracking in the heading process step and to suppress coarsening of the recrystallized grains at the boundary between the head and the screw shaft portion after the solution treatment. Furthermore, when the crystal grains in the screw shaft portion are fine, it is possible to impart the high strength and reliability.

Further, in the method for producing the aluminum alloy screw of the present invention, it is preferable that, in the heat treatment step, a solution treatment is performed by holding at 500 to 570°C for 1 to 5 hours and an aging treatment is performed by holding at 160 to 190°C for 2 to 12 hours, and after the heat treatment step, the rolling process step is performed. By carrying out the rolling process step after the aging treatment, the time required from the solution treatment to the aging treatment step can be shortened. As a result, it is possible to impart the high strength and good dimensional accuracy to the finally obtained screw.

### Effects of the invention

According to the present invention, it is possible to provide the aluminum alloy screw that uses 6000 series aluminum suitable for recycling, that has sufficient mechanical properties, and that can be used for fastening, with respect to automobile parts or the like, which is subjected to loads and is required to be highly reliable. Further, according to the present invention, it is possible to provide the simple and efficient method for producing the aluminum alloy screw, and to provide the material for aluminum allow screw that can be suitably used in the production.

### Brief Explanation of the Drawings

FIG. 1 shows an example of the shape and size of the aluminum alloy screw of the present invention.
FIG. 2 shows an example of the shape and size of the aluminum alloy screw of the present invention.
FIG. 3 shows an example of the shape and size of the aluminum alloy screw of the present invention.
FIG. 4 shows an example of the shape and size of the aluminum alloy screw of the present invention.
FIG. 5 shows an example of the shape and size of the aluminum alloy screw of the present invention.
FIG. 6 is an example of the process diagram showing the method for producing the aluminum alloy screw according to the present invention.
FIG. 7 is a structural photograph of the longitudinal section of the present material for the aluminum alloy screw after the annealing treatment.
FIG. 8 is a structural photograph of the longitudinal section of the present material for the aluminum alloy screw after the T6 heat treatment.
FIG. 9 is a photograph showing the appearance of the present aluminum alloy screw obtained as Example 1.
FIG. 10 is a photograph showing the appearance of the present aluminum alloy screw obtained as Example 2.
FIG. 11 is a photograph of the structure of the longitudinal section of the shaft portion of the present aluminum alloy screw.
FIG. 12 is a structural photograph of the longitudinal section of the comparative material for the aluminum alloy screw after the annealing treatment.
FIG. 13 is a structural photograph of the longitudinal section of the comparative material for the aluminum alloy screw after the T6 heat treatment.
FIG. 14 is a photograph of the structure of the longitudinal section of the shaft portion of the comparative aluminum alloy screw.

### Embodiments for achieving the invention

Representative embodiments of the material for the aluminum alloy screw and the aluminum alloy screw of the present invention, as well as the producing method thereof, will be described in detail below with reference to the drawings, but the present invention is not limited to these.

### 1. Material for Aluminum Alloy Screw

### (1) Shape and Size

The material for the aluminum alloy screw of the present invention is an aluminum alloy wire material that is used as a material for producing the aluminum alloy screw. The length and diameter of the wire material are not particularly limited as long as the effects of the present invention are not impaired, and the wire can have a shape and size suitable for producing the desired aluminum alloy screw. The material for the aluminum alloy screw of the present invention can also be used to produce nuts.

### (2) Composition

The material for the aluminum alloy screw of the present invention contains Si: 0.9 to 1.3 wt%, Cu: 0.8 to 1.5 wt%, Mg: 0.8 to 1.2 wt%, Cr: 0.2 to 0.4 wt%, Mn: 0.15 to 0.45 wt%, Ti: 0.005 to 0.05 wt%, with the balance being Al and inevitable impurities. Each of the component elements will be described below.

### (2-1) Essential Added Elements

### Si: 0.9 to 1.3 wt %

Si forms Al-Cu-Mg-Si-based precipitates together with Mg and Cu, and has the effect of increasing tensile strength and yield strength. When the Si content is less than 0.9 wt %, the age hardening ability is insufficient, and the mechanical strength and reliability required for the material for the aluminum alloy screw cannot be obtained. On the other hand, when the Si content is more than 1.3 wt %, coarse crystallized products are likely to form, which causes a decrease in elongation.

### Cu: 0.8 to 1.5 wt %

Cu forms Al-Cu-Mg-Si-based precipitates together with Mg and Si, and contributes to improving tensile strength and yield strength. When the Cu content is less than 0.8 wt %, these effects cannot be sufficiently obtained, and the tensile strength and yield strength required for the material for the aluminum alloy screw cannot be obtained. On the other hand, when Cu is added more than 1.5 wt %, there is a risk of reducing the quench sensitivity and corrosion resistance. The Cu content is preferably 1.1 to 1.5 wt %. By setting the lower limit of the Cu content at 1.1 wt%, the precipitation strengthening of the Al-Cu-Mg-Si-based compound can be more significantly exhibited, and it is possible to make the tensile strength and 0.2% yield strength of the material for the aluminum alloy screw at higher values.

### Mg: 0.8 to 1.2 wt%

Mg forms Al-Cu-Mg-Si-based precipitates together with Si and Cu, and has the effect of increasing tensile strength and yield strength. When the Mg content is less than 0.8 wt %, the mechanical strength and reliability required for the material for the aluminum alloy screw cannot be obtained. On the other hand, when the Mg content is more than 1.2 wt %, coarse crystallized products are likely to form, which causes a decrease in elongation. Further, the Mg/Si ratio becomes large, and there is a case where decrease in tensile strength and yield strength is caused.

### Cr: 0.2 to 0.4 wt %

Cr is finely crystallized in the metal structure as an Al-Cr-based intermetallic compound during the casting, and suppresses the coarsening of the recrystallized structure during the T6 treatment. This effect can be obtained by adding 0.2 wt% or more of Cr, but when Cr is added in an amount of more than 0.4 wt%, recrystallization is suppressed and the processed structure is maintained, resulting in reduced moldability. Further, when Cr is added in an amount of more than 0.4 wt %, the quench sensitivity decreases, and the mechanical properties of the material for the aluminum alloy screw decrease.

### Mn: 0.15 to 0.45 wt %

Mn is finely crystallized in the metal structure as an Al-Mn-based intermetallic compound during the casting, and suppresses the coarsening of the recrystallized structure during the T6 treatment. This effect can be obtained by adding 0.15 wt% or more of Mn, but when Mn is added in an amount of more than 0.45 wt%, the deformation resistance is increased, which makes plastic working difficult. Furthermore, coarse crystals are more likely to form, and defects such as cracks are more likely to occur during plastic working. Further, when Mn is added in an amount of more than 0.45 wt %, the quench sensitivity decreases, and the mechanical properties of the material for the aluminum alloy screw decrease.

### Ti: 0.005 to 0.05 wt %

Ti has the effect of making the cast structure refine. By making the cast structure refine, the plastic workability such as extrusion processability can be improved. Note that, it is preferable to add Ti immediately before the casting by using an Al-Ti-B rod or the like.

### (2-2) Optional Added Elements

Elements other than Zr and Zn may be added within the allowable range of the JIS 6000 series aluminum alloy specifications. Here, since Fe easily forms needle-like Al-Fe-Si-based compounds, it is preferable to be 0.3 wt % or less.

### (2-3) Inevitable Impurities

Inevitable impurities other than the elements described above are permitted to be contained within a range that does not affect the properties of the material for the aluminum alloy screw of the present invention. Here, since Zr and Zn have adverse effects on extrudability, corrosion resistance and electrical conductivity, the content is preferably less than 0.1 wt%, more preferably less than 0.05 wt%, and most preferably less than 0.005 wt%.

### (3) Structure and Mechanical Properties

The material for the aluminum alloy screw of the present invention includes O material, which has been annealed to exhibit excellent moldability, and T6 material, which has been T6-treated to achieve both high strength and ductility. When producing the aluminum alloy screw by using the O material, it is necessary to carry out the T6 treatment before or after the rolling process step.

The O material of the material for the aluminum alloy screw of the present invention has good moldability and does not crack in a compression test in which the compression ratio is 60% or less. Here, the method and conditions of the compression test are not particularly limited as long as the effects of the present invention are not impaired, and conventionally known test methods and test conditions can be employed, but it is preferable to use a cylindrical test piece having a diameter-to-height ratio of 1:2 as the test pieces for the compression test.

On the other hand, the T6 material of the material for the aluminum alloy screw of the present invention is a wire material that has been subjected to heat treatment as necessary after the wire draw processing. Here, since the material for the aluminum alloy screw has an optimized composition as described above, the recrystallized structure is formed during the wire draw processing, and coarsening of the recrystallized structure during the T6 treatment is suppressed. As a result, the structure mainly composed of fine recrystallized structure is formed.

The method for observing the microstructure of the material for the aluminum alloy screw is not particularly limited, and any of various conventionally known structure observation methods may be used. For example, the material for the aluminum alloy screw may be cut parallel to the longitudinal direction, and the resulting longitudinal cross-sectional sample may be observed with an optical microscope or a scanning electron microscope. Depending on the observation technique, it is preferable to subject the cross-sectional sample to mechanical polishing, buff polishing, electrolytic polishing, etching, or the like.

Further, the structure is one in which Al-Cr-based compounds and Al-Mn-Fe-Si-based compounds, and the like are finely dispersed, and by drawing the wire to the shaft portion of the screw and then applying the T6 treatment, the Al-Cu-Mg-Si-based compounds are finely precipitated, which can give a tensile strength of 430 MPa or more and an elongation at break of 8% or more. More preferable tensile strength is 440 MPa or more, and the most preferable tensile strength is 450 MPa or more. Further, more preferable elongation at break is 9% or more, and the most preferable elongation at break is 10% or more. Note that, the 0.2% yield strength is preferably 370 MPa or more, more preferably 380 MPa or more, and the most preferable 0.2% yield strength is 390 MPa or more.

### (4) Producing method

The method for producing the material for the aluminum alloy screw of the present invention is not particularly limited as long as the effects of the present invention are not impaired, and various conventionally known methods applicable to the production of aluminum alloy wire material can be used. An example of the method for producing the aluminum alloy screw according to the present invention will be described below.

### (4-1) Melting and Casting

As the raw materials, an aluminum ingot, an aluminum scrap, and a mother alloy of additive elements are melted, and conventional molten metal treatments such as slag removal treatment and degassing treatment are performed, and the components are adjusted to prepare a molten metal of the aluminum alloy having the composition of the material for the aluminum alloy screw of the present invention, and, after passing the molten aluminum alloy through a filter device and a degassing device, a cylindrical billet is molded by DC casting (semi-continuous casting). Note that, the molten metal may be directly processed into a wire shape by a continuous casting and rolling method such as Properchi.

### (4-2) Extrusion Processing

The obtained billet is subjected to a homogenization treatment at 500 to 540°C, and then the homogenized billet is heated to 450 to 550°C and extruded into a wire shape of φ 8.0 to 10.0 mm by using a die having a die temperature of 450 to 550°C.

### (4-3) Draw Processing

The obtained wire material is subjected to cold draw processing and to wire draw processing to a wire diameter for the cold heading process step. When the wire draw processing is performed, annealing may be carried out midway to reduce work hardening. When the cold draw processing is performed, it is preferable to perform the process so that the cross-sectional area reduction rate is 30 to 50%. When the cross-sectional area reduction rate is less than 30%, in case that the heat treatment is performed before the cold heading process step, since the material is likely to become non-recrystallized, cracks may occur during the heading process step, and when the rate is more than 50%, it becomes impossible to provide a sufficient drawing step.

### (4-4) Header Process (Cold Heading Process)

The drawn processed material for the screw is subjected to a drawing step and header processing to form the head portion and shaft portion of the screw, thereby forming an intermediate material. Before the header processing, annealing treatment may be carried out. The annealing treatment is preferably performed at a temperature between 350°C and 400°C for 4 to 8 hours. When the holding temperature is less than 350°C or the holding time is less than 4 hours, annealing will be insufficient, and cracks and deterioration of surface properties will occur during the header processing. When the temperature exceeds 400°C or the time exceeds 8 hours, sufficient tensile strength and 0.2% yield strength for the screw cannot be obtained even when the header processing or heat treatment is performed thereafter.

It is preferable that the cross-sectional area reduction rate from the wire material during the heading process step to form the shaft portion of the intermediate material is 30 to 85%. When the cross-sectional area reduction rate is less than 30%, the processing strain is insufficient, the recrystallized structure is likely to become coarse during the solution treatment or the aging treatment, and sufficient tensile strength and 0.2% yield strength cannot be obtained. On the other hand, when exceeding 85%, cracks are likely to occur in the shaft portion during the header processing.

### (4-5) T6 Heat Treatment

The obtained intermediate material is subjected to the solution treatment at 500 to 570°C, and after being subjected to the quenching treatment, the aging treatment is performed at 160 to 190°C for a holding time of 2 to 12 hours. The more preferable conditions for the aging treatment are 170 to 185°C for 4 to 10 hours, and the most preferable conditions for the aging treatment are 175 to 185°C for 6 to 10 hours.

### (4-6) Rolling Processing

The shaft portion of the intermediate material that has been subjected to the aging treatment is rolled to form a screw portion. By carrying out the rolling process after the aging treatment, the time required from the solution treatment to the aging treatment step can be shortened. As a result, the final screw can be provided with high strength and good dimensional accuracy.

### 2. Aluminum alloy screw

### (1) Shape and Size

The aluminum alloy screw of the present invention broadly includes fastening parts having a head portion and a shaft portion, and the shape and size thereof are not particularly limited as long as the effects of the present invention are not impaired, and conventionally known various shapes and sizes can be employed.

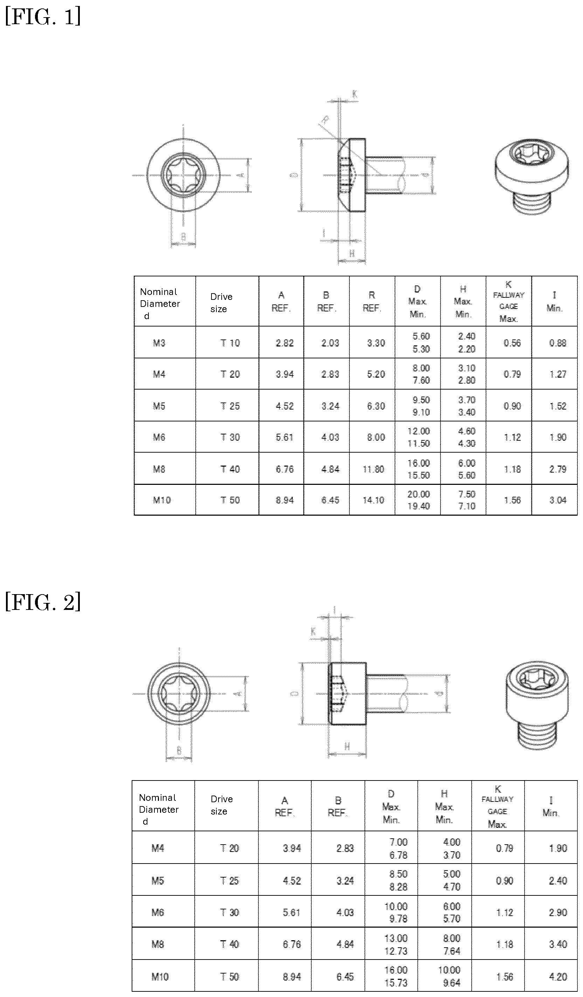

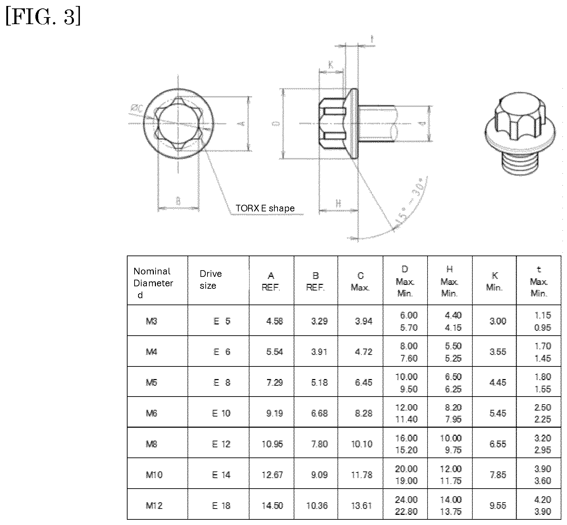

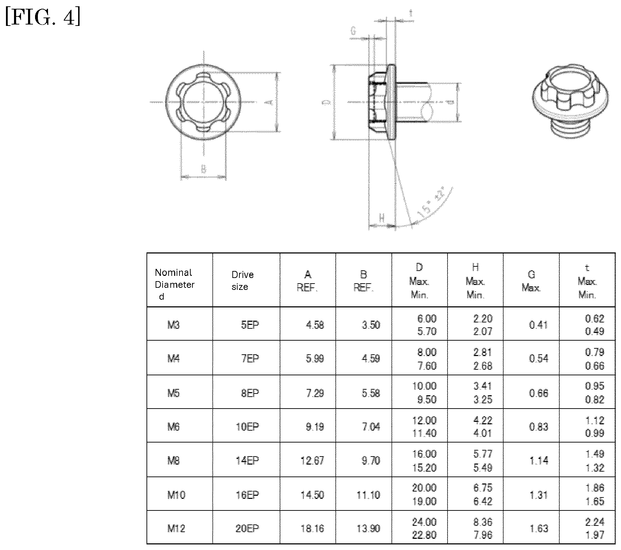

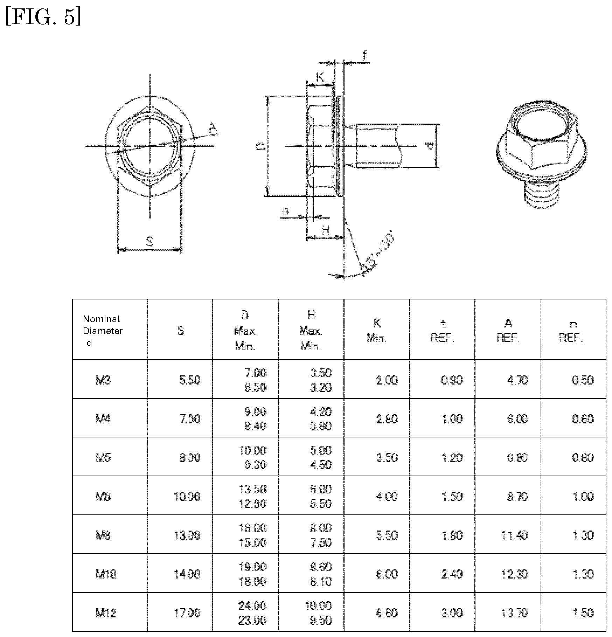

The aluminum alloy screw of the present invention is preferably formed into a hexagonal flange or a cap bolt from the viewpoint of suppressing wear, deformation, cracking, and the like. Further, as a screwdriver, it is preferable to use a hex lobe internal (recessed hole) or external (E-type). In the hex lobe, the contact surface between the screw head and the screwdriver is curved, which allows for more efficient torque transmission and less stress concentration compared to conventional bolts and nuts, thereby improving durability. Examples of shapes and sizes that can be suitably used for the aluminum alloy screw of the present invention are shown in FIG. 1 to FIG. 5.

### (2) Composition

The aluminum alloy screw of the present invention is produced from the material for the aluminum alloy screw of the present invention and has the same composition as the material for the aluminum alloy screw described above.

### (3) Structure and Mechanical Properties

It is preferable that a fine recrystallized structure is formed in the shaft portion of the aluminum alloy screw, and that the average crystal grain size (equivalent circle diameter) of the fine recrystallized structure is 120 µm or less. The shaft portion of the screw is required to have high strength and reliability, and by forming the fine recrystallized structure having the average crystal grain size (equivalent circle diameter) of 120 µm or less, it is possible to impart high tensile properties to the shaft portion. More preferable average crystal grain size (equivalent circle diameter) is 100 µm or less, and the most preferable average crystal grain size (equivalent circle diameter) is 80 µm or less.

The method for determining the average grain size of the crystal grains is not particularly limited as long as the effects of the present invention are not impaired, and the measurements may be performed by various conventionally known methods. For example, it can be determined by cutting the screw shaft portion along the longitudinal section passing through the center thereof, observing the resulting cross-sectional sample with an optical microscope or a scanning electron microscope, and calculating the average grain size of the base material crystal grains. In this case, for example, the crystal grain size can be measured by the intersection method. In other case, the measurement may be performed by using an electron backscatter diffraction measurement device attached to a scanning electron microscope (SEM-EBSD). The observation area for determining the average grain size depends on the size and shape of the shaft portion, but an accurate value can be obtained by determining the observation area so that at least 20 crystal grains are measured. Note that, depending on the observation technique, the cross-sectional sample may be subjected to mechanical polishing, buff polishing, electrolytic polishing, etching, or the like.

With respect to the tensile properties of the shaft portion of the aluminum alloy screw, as a result of being measured by using the tensile test method according to JIS B 1057, a tensile strength is 460 MPa or more, a 0.2% yield strength is 380 MPa or more, and an elongation at break is 10% or more. Further, more preferable 0.2% yield strength is more preferably 390 MPa or more, and the most preferable 0.2% yield strength is 400 MPa or more. Further, more preferable elongation at break is 12% or more, and the most preferable elongation at break is 14% or more.

### 3. Method for Producing Aluminum Alloy Screw

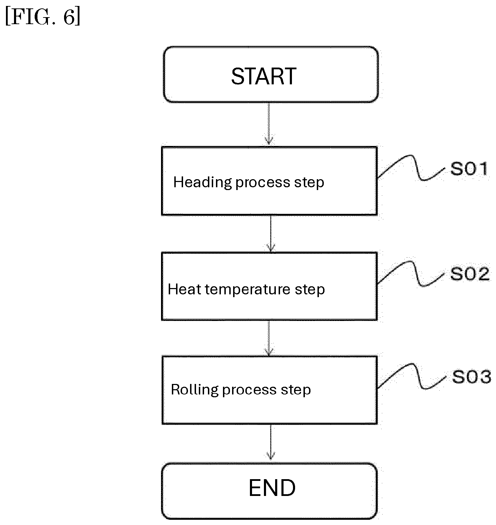

FIG. 6 shows an example of the process diagram showing the method for producing the aluminum alloy screw of the present invention. The method for producing an aluminum alloy screw of the present invention includes a heading process step (S01) of subjecting the material for an aluminum alloy screw of the present invention to the heading to form a screw head, a heat treatment step (S02) of subjecting the material for the aluminum alloy screw to T6 heat treatment, and a rolling process step (S03) of rolling the material for the aluminum alloy screw to form a screw shaft portion. Each step will be described below.

### (1) Heading Process Step (S01)

The heading process step is a step for forming the head of an aluminum alloy screw, and the head can be formed simply and efficiently by plastically deforming the material for the aluminum alloy screw by using a punch and a die.

When the diameter of the material for the aluminum alloy screw is the same as that of the screw shaft portion, the heading process step can be carried out as is, and when the diameter of the material for the aluminum alloy screw is larger than that of the screw shaft portion, the shape and size can be adjusted by drawing or the like as a pre-processing step before the heading process. The conditions for the heading process are not particularly limited as long as the effects of the present invention are not impaired, and various conventionally known processing conditions can be employed.

Here, by subjecting to the annealing after the wire draw processing to the extent of the cross-sectional area reduction rate of about 40% to set the cross-sectional area reduction rate to 30 to 80% in the heading process step, the strength of the aluminum alloy screw can be reliably stabilized. In order to improve the toughness of the aluminum alloy screw, it is preferable to increase the cross-sectional area reduction rate in the heading process step.

### (2) Heat Treatment Step (S02)

The heat treatment step is a step for subjecting the aluminum alloy screw to the T6 heat treatment to improve mechanical properties such as strength and yield strength.

The aluminum alloy screw is subjected to the solution treatment at 500 to 570°C, and after performing the quenching treatment, the aging treatment is performed at 160 to 190°C for a holding time of 2 to 12 hours. The more preferable conditions for the aging treatment are 170 to 185°C for 4 to 10 hours, and the most preferable conditions for the aging treatment are 175 to 185°C for 6 to 10 hours.

The heat treatment step may be carried out before or after the rolling process step. When high strength and yield strength are required for the aluminum alloy screw, it is preferable to carry out the heat treatment step before the rolling process step, and when ductility is required, it is preferable to carry out the heat treatment step after the rolling process step.

### (3) Rolling Process Step (S03)

The form rolling process step is a step for imparting the screw shape to the screw shaft portion. The processing conditions for the rolling process step are not particularly limited as long as the effects of the present invention are not impaired, and various conventionally known conditions can be employed, but it is preferable to provide a rounded root of the screw.

By subjecting the material for the aluminum alloy screw to the heading process step (S01) and the rolling process step (S03), the structure of the material for the aluminum alloy screw is refined and homogenized, and the tensile strength, 0.2% yield strength, and elongation at break can be improved. For example, with respect to the tensile strength, it is possible to increase by about 20 to 30 MPa.

Although representative embodiments of the present invention have been described above, the present invention is not limited to these, and various design changes are possible, and all such design changes are included in the technical scope of the present invention.

### EXAMPLE

### <<Example>>

### (1) Material for the aluminum alloy screw

Molten aluminum alloys (Examples 1 to 10) having the compositions (wt%) shown in Table 1 were degassed and filtered, and then billets were obtained by the DC continuous casting. Next, the billet was heated to 550°C and subjected to the extrusion processing, thereby obtaining an extruded material having the diameter shown in Table 1. After that, the extruded material was subjected to the cold drawing to be wire drawn to the wire diameter of the screw.

Here, the wire draw processing was performed twice, and in the first wire draw processing, the diameter of the aluminum alloy wire material was set to the value shown in Table 1, and the wire material was softened by the annealing at 380°C for 5 hours, and then, in the second wire draw processing, an aluminum alloy wire material having the diameter shown in Table 1 was obtained.

**[Table 1]**

| | Alloy Composition(wt%) | | | | | | | | | Production Step | | | | Tensile Properties after T6 Heat Treatment | |
|---|---|---|---|---|---|---|---|---|---|---|---|---|---|---|---|
| | Si | Fe | Cu | Mg | Cr | Mn | Ti | Zr | Zn | Extrusion diameter /mm | Drawn Wire 1 /mm | Aging Temp. | Drawn Wire 2 /mm | Tensile Strength /MPa | Elongation at Break /% |
| Ex. 1 | 1.05 | 0.21 | 1.10 | 0.88 | 0.28 | 0.39 | 0.01 | <0.01 | <0.01 | 9.5 | *ϕ* 6.8 | 380°C | *ϕ* 5.2 | 438 | 10.0 |
| Ex. 2 | 1.05 | 0.21 | 1.10 | 0.88 | 0.28 | 0.39 | 0.01 | <0.01 | <0.01 | 9.5 | *ϕ* 9.0 | - | *ϕ* 5.2 | 446 | 9.1 |
| Ex. 3 | 1.05 | 0.21 | 1.10 | 0.88 | 0.28 | 0.39 | 0.01 | <0.01 | <0.01 | 9.5 | *ϕ* 7.2 | 380°C | *ϕ* 5.2 | 450 | 10.8 |
| Ex. 4 | 1.06 | 0.20 | 0.92 | 0.87 | 0.28 | 0.39 | 0.02 | <0.01 | <0.01 | 9.5 | *ϕ* 6.8 | 380°C | *ϕ* 5.2 | 430 | 10.5 |
| Ex. 5 | 1.05 | 0.21 | 1.10 | 0.88 | 0.28 | 0.39 | 0.01 | <0.01 | <0.01 | 9.5 | *ϕ* 8.0 | 380°C | *ϕ* 5.2 | 448 | 9.6 |
| Ex. 6 | 1.05 | 0.21 | 1.10 | 0.88 | 0.28 | 0.39 | 0.01 | <0.01 | <0.01 | 9.5 | *ϕ* 6.0 | 380°C | *ϕ* 5.2 | 441 | 10.3 |
| Ex. 7 | 1.02 | 0.20 | 1.26 | 0.88 | 0.28 | 0.39 | 0.01 | <0.01 | <0.01 | 9.5 | *ϕ* 6.8 | 380°C | *ϕ* 5.2 | 442 | 10.1 |
| Ex. 8 | 1.26 | 0.21 | 1.10 | 0.82 | 0.35 | 0.20 | 0.01 | <0.01 | <0.01 | 9.5 | *ϕ* 6.8 | 380°C | *ϕ* 5.2 | 434 | 10.7 |
| Ex. 9 | 0.95 | 0.21 | 1.10 | 1.15 | 0.22 | 0.39 | 0.01 | <0.01 | <0.01 | 9.5 | *ϕ* 6.8 | 380°C | *ϕ* 5.2 | 448 | 10.4 |
| Ex. 10 | 1.06 | 0.22 | 1.14 | 0.86 | 0.29 | 0.39 | 0.01 | <0.01 | <0.01 | 9.0 | *ϕ* 6.8 | 380°C | *ϕ* 5.2 | 441 | 9.9 |
| Com. Ex. 1 | 1.12 | 0.20 | 0.44 | 0.90 | 0.28 | 0.38 | 0.01 | <0.01 | <0.01 | 7.2 | *ϕ* 6.8 | 380°C | *ϕ* 5.2 | 399 | 12.0 |
| Com. Ex. 2 | 1.03 | 0.20 | 0.69 | 0.83 | 0.29 | 0.37 | 0.01 | <0.01 | <0.01 | 8.0 | *ϕ* 6.8 | 380°C | *ϕ* 5.2 | 418 | 10.0 |
| Com. Ex. 3 | 1.07 | 0.20 | 0.69 | 0.88 | 0.28 | 0.39 | 0.02 | <0.01 | <0.01 | 7.2 | *ϕ* 6.8 | 380°C | *ϕ* 5.2 | 422 | 10.0 |
| Com. Ex. 4 | 1.07 | 0.20 | 0.69 | 0.88 | 0.28 | 0.39 | 0.02 | <0.01 | <0.01 | 9.5 | *ϕ* 6.8 | 380°C | *ϕ* 5.2 | 414 | 10.3 |
| Com. Ex. 5 | 1.03 | 0.20 | *0.72* | 0.88 | <0.01 | 0.60 | 0.02 | 0.12 | 0.17 | 9.5 | ϕ 6.8 | 380°C | *ϕ* 5.2 | 413 | 9.1 |
| Com. Ex. 6 | 1.10 | 0.20 | 0.69 | 0.88 | 0.16 | 0.18 | 0.02 | <0.01 | <0.01 | 9.5 | *ϕ* 6.8 | 380°C | *ϕ* 5.2 | 414 | 7.3 |
| Com. Ex. 7 | 1.26 | 0.20 | 0.83 | 0.83 | 0.35 | 0.60 | 0.01 | <0.01 | <0.01 | 9.5 | *ϕ* 6.8 | 380°C | *ϕ* 5.2 | 428 | 10.5 |
| Com. Ex. 8 | 1.05 | *0.21* | 0.83 | 1.30 | 0.50 | 0.39 | 0.01 | <0.01 | <0.01 | - | - | - | - | - | - |

The obtained wire material was subjected to the solution treatment at 560°C for 2 hours, and then to the artificial aging treatment at 180°C for 6 hours (T6 heat treatment). A tensile test piece (JIS Z2201 No. 2 test piece) was taken in the wire draw processing direction, and the tensile properties were evaluated according to the JIS Z2241 tensile test method. The results obtained are shown in Table 1. Note that, the test was repeated three times, and the average value was calculated. The material for the aluminum alloy screw (T6 material) according to the present invention has excellent tensile properties, and in all cases, the tensile strength is 430 MPa or more and the elongation at break is 8% or more.

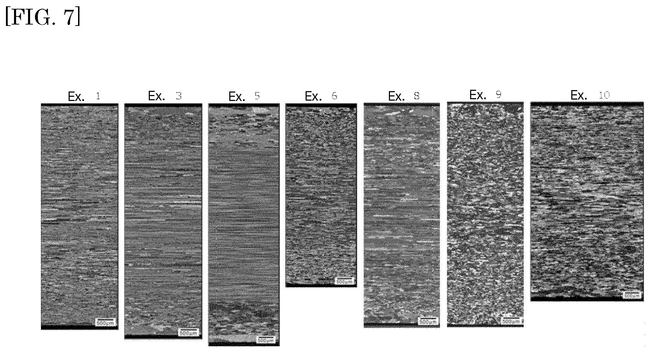

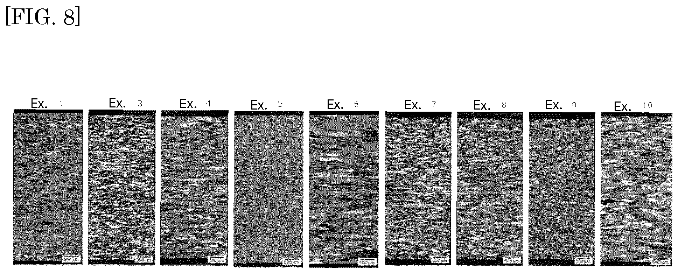

After the annealing treatment and the T6 heat treatment, each wire material was cut in a cross section parallel to the longitudinal direction (longitudinal cross section), mirror polished and etched to prepare a cross-sectional observation sample, and the structure observation was conducted by an optical microscope. Photographs of the structure of the longitudinal cross section of each wire material after the annealing treatment and after the T6 heat treatment are shown in FIG. 7 and FIG. 8, respectively. Although there are differences depending on the working rate during the drawing and the reductive drawing and on the composition, it can be seen that each wire material after the T6 heat treatment has the fine recrystallized structure.

Further, the tensile properties of the aluminum alloy wire material in the state annealed after the first wire draw processing were evaluated in the same manner as in the above tensile test. The results obtained are shown in Table 2. It can be seen that the present material for the aluminum alloy screw (O material) of the present invention has a high elongation at break of 10% or more.

**[Table 2]**

| | Alloy Composition (wt%) | | | | | | | | | Production Step | | | Tensile Properties after Annealing Treatment | | |
|---|---|---|---|---|---|---|---|---|---|---|---|---|---|---|---|
| | Si | Fe | Cu | Mg | Cr | Mn | Ti | Zr | Zn | Extrusion diameter /mm | Drawn Wire 1 /mm | Aging Temp. | Tensile Strength /MPa | Elongation at Break /% | Limit Compression rate /% |
| Ex. 1 | 1.05 | 0.21 | 1.10 | 0.88 | 0.28 | 0.39 | 0.01 | <0.01 | <0.01 | 9.5 | ϕ 6.8 | 380°C | 189 | 15.2 | 75 |
| Ex. 3 | 1.05 | 0.21 | 1.10 | 0.88 | 0.28 | 0.39 | 0.01 | <0.01 | <0.01 | 9.5 | ϕ 7.2 | 380°C | 188 | 15.4 | 70 |
| Ex. 5 | 1.05 | 0.21 | 1.10 | 0.88 | 0.28 | 0.39 | 0.01 | <0.01 | <0.01 | 9.5 | ϕ 8.0 | 380°C | 201 | 13.3 | 65 |
| Ex. 6 | 1.05 | 0.21 | 1.10 | 0.88 | 0.28 | 0.39 | 0.01 | <0.01 | <0.01 | 9.5 | ϕ 6.0 | 380°C | 189 | 18.7 | 80 |
| Ex. 8 | 1.26 | 0.21 | 1.10 | 0.82 | 0.35 | 0.20 | 0.01 | <0.01 | <0.01 | 9.5 | ϕ 6.8 | 380°C | 180 | 15.6 | 75 |
| Ex. 9 | 0.95 | 0.21 | 1.10 | 1.15 | 0.22 | 0.39 | 0.01 | <0.01 | <0.01 | 9.5 | ϕ 6.8 | 380°C | 189 | 16.3 | 75 |
| Ex. 10 | 1.06 | 0.22 | 1.14 | 0.86 | 0.29 | 0.39 | 0.01 | <0.01 | <0.01 | 9.0 | *ϕ* 6.8 | 380°C | 197 | 13.6 | 75 |
| Com. Ex. 1 | 1.12 | 0.20 | 0.44 | 0.90 | 0.28 | 0.38 | 0.01 | <0.01 | <0.01 | 7.2 | *ϕ* 6.8 | 380°C | 193 | 9.2 | 70 |
| Com. Ex. 2 | 1.03 | 0.20 | 0.69 | 0.83 | 0.29 | 0.37 | 0.01 | <0.01 | <0.01 | 8.0 | *ϕ* 6.8 | 380°C | 178 | 7.9 | 75 |
| Com. Ex. 5 | 1.03 | 0.20 | 0.72 | 0.88 | <0.01 | 0.60 | 0.02 | 0.12 | 0.17 | 9.5 | *ϕ* 6.8 | 380°C | 166 | 20.0 | 75 |
| Com. Ex. 6 | 1.10 | 0.20 | 0.69 | 0.88 | 0.16 | 0.18 | 0.02 | <0.01 | <0.01 | 9.5 | *ϕ* 6.8 | 380°C | 155 | 19.7 | 80 |
| Com. Ex. 7 | 1.26 | 0.20 | 0.83 | 0.83 | 0.35 | 0.60 | 0.01 | <0.01 | <0.01 | 9.5 | *ϕ* 6.8 | 380°C | 185 | 12.6 | Over 85 |

Next, in order to evaluate the moldability of the present material for the aluminum alloy screw (O material) after the annealing treatment, the limit compression ratio was measured. Specifically, a test piece (diameter to height ratio of 1:2) made of the present material for the aluminum alloy screw (O material) was compressed at a test speed of 10 to 20 mm/min by using a 300 kN hydraulic universal testing machine available from Shimadzu Corporation, and the compression ratio at the time when cracks occurred was defined as the limit compression ratio. The results obtained are shown in Table 2. It can be seen that the present material for the aluminum alloy screw (O material) of the present invention has good moldability with no cracks occurring at the compression ratio of 60% or less.

### (2) Aluminum Alloy Screw

Material for the aluminum alloy screws (O materials) having the compositions of Examples 1 to 3 shown in Table 1 were subjected to the wire draw processing to obtain aluminum alloy wire materials having diameters shown in Table 3. The drawing rates in the wire draw processing are shown in Table 3.

Next, the aluminum alloy wire material which was cut to an appropriate length was subjected to the T6 heat treatment (solution treatment at 560°C for 2 hours, followed by the artificial aging treatment at 180°C for 6 hours), and then subjected to the heading process to form the shaft portion and head portion of an aluminum alloy screw. Next, the screw shaft portion was subjected to the rolling processing to obtain the aluminum alloy screw of the present invention.

**[Table 3]**

| | Alloy Composition (wt%) | | | | | | | | | Diameter /mm | Area Reduction Rate in Bolt Production Step (%) | Tensile Strength (MPa) | 0.2%Yield Strength (MPa) | Elongation at Break (%) | Average Crystal Grain Size of Shaft Portion (µm) |
|---|---|---|---|---|---|---|---|---|---|---|---|---|---|---|---|
| | Si | Fe | Cu | Mg | Cr | Mn | Ti | Zr | Zn | | | | | | |
| Ex. 1 | 1.05 | 0.21 | 1.10 | 0.88 | 0.28 | 0.39 | 0.01 | <0.01 | <0.01 | 6.8 | 40 | 463 | 422 | 13 | 103 |
| Ex. 2 | 1.05 | 0.21 | 1.10 | 0.88 | 0.28 | 0.39 | 0.01 | <0.01 | <0.01 | 9.0 | 66 | 469 | 437 | 11 | 53 |
| Ex. 3 | 1.05 | 0.21 | 1.10 | 0.88 | 0.28 | 0.39 | 0.01 | <0.01 | <0.01 | 7.2 | 47 | 461 | 388 | 15 | 103 |
| Com. Ex. 1 | 1.12 | 0.20 | 0.44 | 0.90 | 0.28 | 0.38 | 0.01 | <0.01 | <0.01 | 6.8 | 40 | 428 | 365 | 12 | 206 |
| Com. Ex. 2 | 1.03 | 0.20 | 0.69 | 0.83 | 0.29 | 0.37 | 0.01 | <0.01 | <0.01 | 6.8 | 40 | 437 | 362 | 16 | 110 |
| Com. Ex. 9 | 1.10 | 0.30 | 0.86 | 0.91 | <0.01 | 0.80 | <0.01 | 0.07 | 0.56 | 6.8 | 40 | 434 | 382 | 13 | 100 |

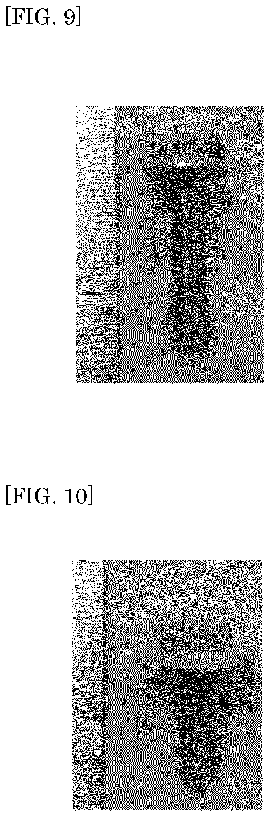

Photographs of the appearance of the present aluminum alloy screws (hexagon socket cap bolts) obtained as Examples 1 and Example 2 are shown in FIG. 9 and FIG. 10, respectively. No defects, surface roughness, or the like were found in the present aluminum alloy screws, and it is said that they had a good shape. The shape and size of the present aluminum alloy screw obtained as Example 3 were the same as those in Example 1, and no defects, surface roughness, or the like were observed.

Next, in order to evaluate the mechanical properties of the screw portion, the tensile test was carried out based on JIS B 1057 (tensile test method for non-ferrous metal screw members). The head portion and the screw portion of the present aluminum alloy screw were fixed, and a tensile load was applied in the axial direction to measure the load and elongation at break. The tensile test was carried out by using a precision universal testing machine (AG-X plus) available from Shimadzu Corporation at a test speed of 2 mm/min. The results obtained are shown in Table 3. It can be seen that the present aluminum alloy screws have a tensile strength of 460 MPa or more, a 0.2% yield strength of 380 MPa or more, and an elongation at break of 10% or more in all three tensile test pieces.

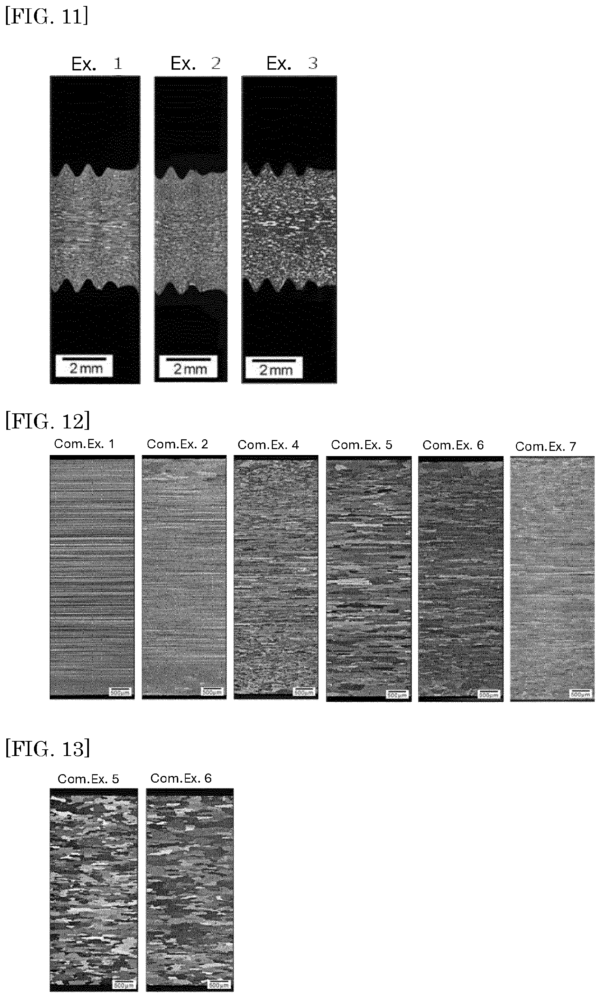

FIG. 11 shows a photograph of the structure of the shaft portion of the present aluminum alloy screw in Example 1, Example 2, and Example 3. It can be seen that the fine recrystallized structure is formed in the shaft portion of the present aluminum alloy screw. Further, when the average crystal grain size (circle equivalent diameter) was calculated by using the structure photograph shown in FIG. 11, the values shown in Table 3 were obtained. In the shaft portion of each of the present aluminum alloy screws, the average crystal grain size (circle equivalent diameter) is 120 µm or less.

### <<Comparative Example>>

Aluminum alloys (Comparative Example 1 to Comparative Example 8) having the compositions (wt %) shown in Table 1 were used to obtain the comparative material for the aluminum alloy screws in the same manner as in the Example.

The tensile properties of each comparative material for the aluminum alloy screw that had been subjected to the T6 heat treatment were evaluated in the same manner as in the Example. The results obtained are shown in Table 1. In all cases, the tensile strength of the comparative material for the aluminum alloy screws did not reach 430 MPa, and in Comparative Example 6, the elongation at break was only 7.3%. Note that, with respect to Comparative Example 8, the casting cracks occurred, and a tensile test could not be carried out.

The tensile properties and limit compression ratios of each comparative material for the aluminum alloy screw that had been subjected to the annealing treatment were evaluated in the same manner as in the Example. The results obtained are shown in Table 2. Though the comparative material for the aluminum alloy screw after the annealing has good moldability, as shown in Table 1, when subjected to the T6 heat treatment, sufficient strength cannot be obtained.

As in the case of the Example, the structure of each wire material after the annealing treatment and the T6 heat treatment was observed with an optical microscope. Photographs of the structure of the longitudinal section of each wire material after the annealing treatment and after the T6 heat treatment are shown in FIG. 12 and FIG. 13, respectively. It can be seen that in the comparative material for the aluminum alloy screw, the structure is significantly coarsened after the T6 heat treatment.

Further, in the same manner as in the Example, the comparative aluminum alloy screws in Comparative Examples 1, 2 and 9 were obtained. The shape and size of the comparative aluminum alloy screw are the same as those in Examples 1 and 3. The tensile properties of the obtained comparative aluminum alloy screws were evaluated in the same manner as in the Example, and the results obtained are shown in Table 3.

The screws made in Comparative Examples 1, 2 and the screw of Comparative Example 9 which is the 6056 alloy according to the international alloy standard did not reach a tensile strength of 440 MPa, and the 0.2% yield strength did not reach 370 MPa. Further, the present aluminum alloy screws have a higher elongation at break than the 6056 screw. From these results, it can be seen that the present aluminum alloy screw of the present invention has superior tensile properties and reliability compared to the screws by using the conventional 6000 series aluminum alloys.

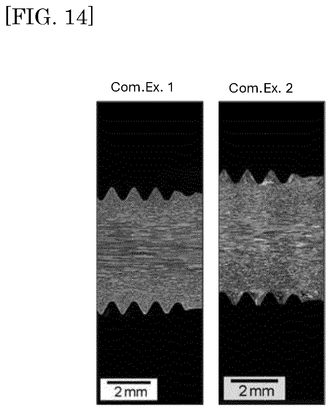

In the same manner as in the Example, the structures of the shaft portion of the comparative aluminum alloy screws in Comparative Example 1 and Example 2 were observed.
The resulting structure photograph is shown in FIG. 14. It can be confirmed that the structure of the shaft portion of the comparative aluminum alloy screw has proceeded coarse. When the average crystal grain size (circle equivalent diameter) was calculated for Comparative Example 1, Comparative Example 2 and Comparative Example 9, the values shown in Table 3 were obtained. In Comparative Example 1, the average crystal grain size (circle equivalent diameter) is a large value of 206 µm.

## Claims

1. An aluminum alloy screw comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities; and
the tensile properties of the screw shaft portion are a tensile strength of 460 MPa or more, a 0.2% yield strength of 380 MPa or more, and an elongation at break of 10% or more.

2. The aluminum alloy screw according to claim 1, wherein the Cu content is 1.1 to 1.5 wt %.

3. The aluminum alloy screw according to claim 1 or 2, wherein the Cr content is more than 0.25 wt % and 0.4 wt % or less.

4. The aluminum alloy screw according to claim 1 or 2, wherein a fine recrystallized structure is formed in the screw shaft portion, and that the average crystal grain size (equivalent circle diameter) of the fine recrystallized structure is 120 µm or less.

5. A material for the aluminum alloy screw comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities;
wherein no cracks occur in a compression test in which the compression ratio is 60% or less.

6. A material for the aluminum alloy screw of the present invention comprising:
Si: 0.9 to 1.3 wt%,
Cu: 0.8 to 1.5 wt%,
Mg: 0.8 to 1.2 wt%,
Cr: 0.2 to 0.4 wt%,
Mn: 0.15 to 0.45 wt%,
Ti: 0.005 to 0.05 wt%,
with the balance being Al and inevitable impurities; and
having tensile properties of 430 MPa or more in tensile strength and 8% or more in elongation at break.

7. The material for the aluminum alloy screw according to claim 5 or 6, wherein the Cu content is 1.1 to 1.5 wt%.

8. The material of the aluminum alloy screw according to claim 5 or 6, wherein the Cr content is more than 0.25 wt % and 0.4 wt % or less.

9. A method for producing an aluminum alloy screw, comprising the steps of:
a heading process step of subjecting a material for an aluminum alloy screw containing Si: 0.9 to 1.3 wt%, Cu: 0.8 to 1.5 wt%, Mg: 0.8 to 1.2 wt%, Cr: 0.2 to 0.4 wt%, Mn: 0.15 to 0.45 wt%, Ti: 0.005 to 0.05 wt%, with the balance being Al and inevitable impurities to cold heading to form a screw head;
a heat treatment step of subjecting the material for the aluminum alloy screw to T6 heat treatment; and
a rolling process step of rolling the material for the aluminum alloy screw to form a screw shaft portion.

10. The method for producing an aluminum alloy screw according to claim 9, wherein the material for the aluminum alloy screw is subjected to a heading process so that the cross-sectional area reduction rate is to 30 to 85% as a pre-step of the heading process.

11. The method for producing an aluminum alloy screw according to claim 9 or 10, wherein
in the heat treatment step, a solution treatment is performed by holding at 500 to 570°C for 1 to 5 hours and an aging treatment is performed by holding at 160 to 190°C for 2 to 12 hours, and
after the heat treatment step, the rolling process step is performed.
